(19) Europäisches Patentamt
European Patent Office
Office européen des brevets

(11) **EP 4 642 057 A1**

(12) **EUROPEAN PATENT APPLICATION**
published in accordance with Art. 153(4) EPC

(43) Date of publication:
**29.10.2025 Bulletin 2025/44**

(21) Application number: **23905055.2**

(22) Date of filing: **16.03.2023**

(51) International Patent Classification (IPC):
*H04W 4/029* (2018.01)

(52) Cooperative Patent Classification (CPC):
**H04W 4/029; H04W 4/02**

(86) International application number:
**PCT/CN2023/081901**

(87) International publication number:
**WO 2024/130863 (27.06.2024 Gazette 2024/26)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2022 CN 202211658485**

(71) Applicant: **Quectel Wireless Solutions Co., Ltd. Shanghai 201601 (CN)**

(72) Inventors:
• **ZHAO, Zheng**
  **Shanghai 201601 (CN)**
• **LYU, Ling**
  **Shanghai 201601 (CN)**
• **YANG, Zhongzhi**
  **Shanghai 201601 (CN)**

(74) Representative: **Fish & Richardson P.C.**
**Highlight Business Towers**
**Mies-van-der-Rohe-Straße 8**
**80807 München (DE)**

(54) **DISTANCE MEASUREMENT METHOD AND DISTANCE MEASUREMENT APPARATUS**

(57) This application provides a ranging method and a ranging apparatus, which are beneficial to improve accuracy of distance measurement performed on a terminal device by using a TA or a path loss, thereby improving positioning accuracy for the terminal device. The ranging method includes: receiving, by a first device, a first TA corresponding to a terminal device, where the first TA is used for determining first distance information about the terminal device based on a TA quantization interval corresponding to the first TA, and the first distance information includes a first distance between the terminal device and a network device; determining, by the first device, second distance information about the terminal device; and performing, by the first device, distance measurement on the terminal device based on the first distance information and the second distance information, where the second distance information is determined based on one or more of following: a path loss corresponding to the terminal device; or a second TA, where a TA quantization interval corresponding to the second TA is less than the TA quantization interval corresponding to the first TA.

FIG. 5

## Description

This application claims priority to Chinese Patent Application No. 2022116584854, filed with the Chinese Patent Office on December 22, 2022 and entitled "RANGING METHOD AND RANGING APPARATUS", which is incorporated herein by reference in its entirety.

## TECHNICAL FIELD

This application relates to the field of communications technologies, and more specifically, to a ranging method and a ranging apparatus.

## BACKGROUND

In a communications system, ranging performed on a terminal device may be used for positioning of the terminal device. For example, a distance between the terminal device and a network device may be determined by using timing advance (timing advance, TA) or a path loss corresponding to the terminal device. In this ranging mode, existing communication parameters are used, and complexity is relatively low. However, there is a relatively large error when ranging is performed on the terminal device by using these parameters, thus causing relatively low ranging accuracy.

## SUMMARY

Embodiments of the present application provide a ranging method and a ranging apparatus. Various aspects of embodiments of the present application are described below.

According to a first aspect, a ranging method is provided, and the ranging method includes: receiving, by a first device, a first TA corresponding to a terminal device, where the first TA is used for determining first distance information about the terminal device based on a TA quantization interval corresponding to the first TA, and the first distance information includes a first distance between the terminal device and a network device; determining, by the first device, second distance information about the terminal device; and performing, by the first device, distance measurement on the terminal device based on the first distance information and the second distance information, where the second distance information is determined based on one or more of the following: a path loss corresponding to the terminal device; or a second TA, where a TA quantization interval corresponding to the second TA is less than the TA quantization interval corresponding to the first TA.

According to a second aspect, a ranging method is provided, and the ranging method includes: transmitting, by a network device, a first TA corresponding to a terminal device, where the first TA is used for determining first distance information about the terminal device based on a TA quantization interval corresponding to the first TA, and the first distance information includes a first distance between the terminal device and a network device; and transmitting, by the network device, indication information related to second distance information about the terminal device, where the second distance information is determined based on a second TA, and a TA quantization interval corresponding to the second TA is less than the TA quantization interval corresponding to the first TA, where the first distance information and the second distance information are used for performing distance measurement on the terminal device.

According to a third aspect, a ranging apparatus is provided, where the ranging apparatus is a first device, and the first device includes: a receiving unit, receiving a first TA corresponding to a terminal device, where the first TA is used for determining first distance information about the terminal device based on a TA quantization interval corresponding to the first TA, and the first distance information includes a first distance between the terminal device and a network device; a determining unit, determining second distance information about the terminal device; and a ranging unit, performing distance measurement on the terminal device based on the first distance information and the second distance information, where the second distance information is determined based on one or more of following: a path loss corresponding to the terminal device; or a second TA, where a TA quantization interval corresponding to the second TA is less than the TA quantization interval corresponding to the first TA.

According to a fourth aspect, a ranging apparatus provided, where the ranging apparatus is a network device, and the network device includes: a first transmitting unit, transmitting a first TA corresponding to a terminal device, where the first TA is used for determining first distance information based on a TA quantization interval corresponding to the first TA, and the first distance information includes a first distance between the terminal device and a network device; and a second transmitting unit, transmitting indication information related to second distance information about the terminal device, where the second distance information is determined based on a second TA, and a TA quantization interval corresponding to the second TA is less than the TA quantization interval corresponding to the first TA, where the first distance information and the second distance information are used for performing distance measurement on the terminal device.

According to a fifth aspect, a communications apparatus is provided, including a memory and a processor, where the memory is configured to store a program, and the processor is configured to invoke the program in the memory to perform the method according to the first aspect or the second aspect.

According to a sixth aspect, an apparatus is provided, the apparatus including a processor configured to invoke a program from a memory to perform the method according to the first aspect or the second aspect.

According to a seventh aspect, a chip is provided, including a memory and a processor, where the memory stores executable code, and the processor is configured to execute the executable code to implement the method according to the first aspect or the second aspect.

According to an eighth aspect, a computer-readable storage medium is provided, and the computer-readable storage medium storing a program that causes a computer to perform the method according to the first aspect or the second aspect.

According to a ninth aspect, a computer program product is provided, the computer program product including a program that causes a computer to perform the method according to the first aspect or the second aspect.

According to a tenth aspect, a computer program is provided, where the computer program causes a computer to perform the method according to the first aspect or the second aspect.

In embodiments of the present application, a first device determines first distance information and second distance information by using first TA, and at least one of a path loss or second TA with a smaller TA quantization interval, respectively, so as to perform distance measurement on a terminal device. Based on the first distance information and the second distance information, accuracy of the distance measurement may be further improved on the basis of determining an approximate location of the terminal device. According to the ranging method provided in embodiments of the present application, ranging accuracy for a terminal device may be improved, thereby helping improve positioning accuracy for the terminal device.

BRIEF DESCRIPTION OF THE DRAWINGS

FIG. 1 shows a wireless communications system to which an embodiment of the present application is applied.
FIG. 2 is a schematic structural diagram of a communications system by using a related positioning method.
FIG. 3 is a schematic diagram of beamforming.
FIG. 4 shows a comparison graph between a path loss-based fitted distance and an actual distance.
FIG. 5 is a schematic flowchart of a ranging method according to an embodiment of the present application.
FIG. 6 is a schematic flowchart of another ranging method according to an embodiment of the present application.
FIG. 7 is a schematic flowchart of a possible implementation according to an embodiment of the present application.
FIG. 8 is a schematic flowchart of another possible implementation according to an embodiment of the present application.
FIG. 9 is a schematic flowchart of still another possible implementation according to an embodiment of the present application.
FIG. 10 is a schematic flowchart of still another possible implementation according to an embodiment of the present application.
FIG. 11 is a schematic flowchart of still another possible implementation according to an embodiment of the present application.
FIG. 12 is a schematic structural diagram of a ranging apparatus according to an embodiment of the present application.
FIG. 13 is a schematic structural diagram of another ranging apparatus according to an embodiment of the present application.
FIG. 14 is a schematic structural diagram of a communications apparatus according to an embodiment of the present application.

**DETAILED DESCRIPTION OF THE EMBODIMENTS**

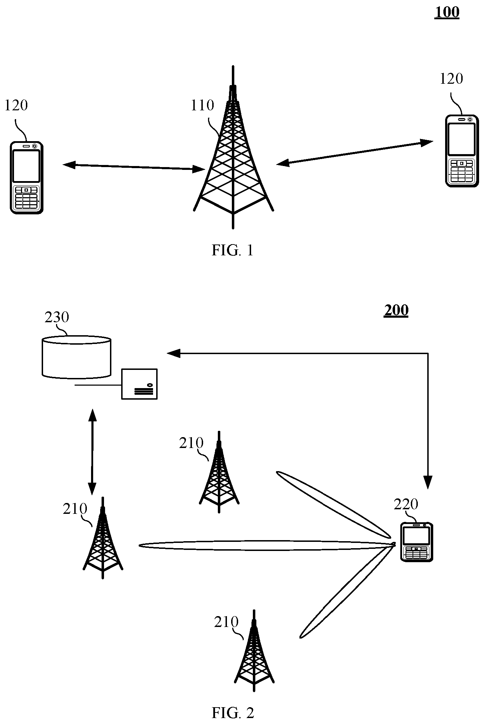

The following clearly and thoroughly describes the technical solutions in embodiments of the present application with reference to the accompanying drawings. Apparently, the described embodiments are only some rather than all of the embodiments of the present application. For ease of understanding, the terms and communication processes involved in the present application are first described below with reference to FIG. 1 to FIG. 4.

Communications system

FIG. 1 shows a wireless communication system 100 to which an embodiment of the present application is applicable. The wireless communications system 100 may include a network device 110 and a terminal device 120. The network device 110 may be a device that communicates with the terminal device 120. The network device 110 may provide communication coverage for a specific geographical area, and may communicate with the terminal device 120 located in the coverage area.

FIG. 1 exemplarily shows one network device and two terminal devices. Optionally, the wireless communications system 100 may include a plurality of network devices, and another quantity of terminal devices may be included in the coverage of each network device, which is not limited in embodiments of the present application.

It should be understood that the technical solutions in embodiments of the present application may be applied to various communications systems, for example, such as a 5th generation (5th generation, 5G) system, a new radio (new radio, NR) system, a long-term evolution (long term evolution, LTE) system, an LTE frequency division duplex (frequency division duplex, FDD) system, an LTE time division duplex (time division duplex, TDD) system, a global system for mobile communication (global system of mobile communication, GSM), a code division multiple access (code division multiple access, CDMA) system, a wideband code division multiple access (wideband code division multiple access, WCDMA) system, a general packet radio service (general packet radio service, GPRS), an advanced long term evolution (advanced long term evolution, LTE-A) system, an evolved system of an NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial network (non-terrestrial network, NTN) system, a universal mobile telecommunications system (universal mobile telecommunication system, UMTS), a wireless local area network (wireless local area networks, WLAN), wireless fidelity (wireless fidelity, WiFi), or another communications system. The technical solutions provided in the present application may further be applied to a future communications system, such as a 6$^{th}$ generation mobile communications system or a satellite communications system.

The terminal device in embodiments of the present application may also be referred to as a user equipment (user equipment, UE), an access terminal, a subscriber unit, a subscriber station, a mobile site, a mobile station (mobile station, MS), a mobile terminal (mobile Terminal, MT), a remote station, a remote terminal, a mobile device, a user terminal, a terminal, a wireless communications device, a user agent, or a user apparatus. The terminal device in the embodiments of the present application may be a device providing a user with voice and/or data connectivity and capable of connecting people, objects, and machines, such as a handheld device or vehicle-mounted device having a wireless connection function. The terminal device in the embodiments of the present application may be a mobile phone (mobile phone), a tablet computer (pad), a notebook computer, a palmtop computer, a mobile Internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. Optionally, the UE may be configured to function as a network device. For example, the UE may function as a scheduling entity, which provides a sidelink signal between UEs in V2X, D2D, or the like. For example, a cellular phone and a vehicle communicate with each other by using a sidelink signal. A cellular phone and a smart household device communicate with each other, without the relay of a communication signal through a network device.

In embodiments of this application, the terminal device may alternatively be a station (STATION, ST) in a WLAN, and may be a cellular phone, a cordless phone, a session initiation protocol (session initiation protocol, SIP) phone, a wireless local loop (wireless local loop, WLL) station, a personal digital assistant (personal digital assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (Public Land Mobile Network, PLMN), or the like.

The network device in embodiments of the present application may be a device for communicating with the terminal device. The network device may also be referred to as an access network device or a wireless access network device. For example, the network device may be a base station. The network device in embodiments of the present application may be a radio access network (radio access network, RAN) node (or device) that connects the terminal device to a wireless network. The network device may broadly cover various names in the following, or replace with the following names, for example, a node B (NodeB), an evolved NodeB (evolved NodeB, eNB), a next generation network device (next generation NodeB, gNB), a relay station, an access point, a transmitting and receiving point (transmitting and receiving point, TRP), a transmitting point (transmitting point, TP), a master station MeNB, a secondary station SeNB, a multimode radio (MSR) node, a home network device, a network controller, an access node, a wireless node, an access piont (access piont, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The network device may be a macro network device, a micro network device, a relay node, a donor node, or the like, or a combination thereof. Alternatively, the network device may be a communication module, a modem, or a chip disposed in the device or apparatus described above. The network device may further be a mobile switching center and a device-to-device D2D, a vehicle-to-everything (vehicle-to-everything, V2X), a device that undertakes a network device function in machine-to-machine (machine-to-machine, M2M) communication, a network side device in a 6G network, a device that undertakes a network device function in a future communications system, or the like. The network device may support a network of a same or different access technology. A specific technology and a specific device form used by the network device are not limited in embodiments of the present application.

The network device may be fixed or mobile. For example, a helicopter or an unmanned aerial vehicle may be configured to function as a mobile network device, and one or more cells may move depending on a location of the mobile network device. In another example, a helicopter or an unmanned aerial vehicle may be configured to function as a device that communicates with another network device.

In some deployments, the network device in embodiments of the present application may be a CU or a DU, or the network device includes a CU and a DU. The gNB may further include an AAU.

The network device and the terminal device may be deployed on land, including being indoors or outdoors, handheld, or vehicle-mounted, may be deployed on a water surface, or may be deployed on a plane, a balloon, or a satellite in the air. A scenario in which the network device and the terminal device are located is not limited in embodiments of the present application.

In embodiments of the present application, the network device may provide a service for a cell, and the terminal device communicates with the network device by using a transmission resource (for example, a frequency resource or a spectrum resource) used by the cell. The cell may be a cell corresponding to the network device. The cell may belong to a macro network device or belong to a network device corresponding to a small cell (small cell). The small cell herein may include a metro cell (metro cell), a micro cell (micro cell), a pico cell (pico cell), a femto cell (femto cell), or the like. These small cells feature small coverage and low transmit power, and are suitable for providing a high-speed data transmission service.

In embodiments of the present application, the wireless communications system shown in FIG. 1 may further include another network entity such as a mobility management entity (mobility management entity, MME) or an access and mobility management function (access and mobility management function, AMF). This is not limited in embodiments of the present application.

It should be understood that all or part of the functions of the communications device in the present application may also be implemented by software functions running on hardware, or by virtualization functions instantiated on a platform (such as a cloud platform).

Positioning technology in a communications system

Referring to FIG. 2, a communications system 200 may further include a positioning device 230. The positioning device 230 may be configured to determine location information about a terminal device. The positioning device 230 may be located in a core network. The positioning device 230 may sometimes be referred to as a positioning server. An NR system is used as an example. The positioning device 230 may be a location management function (location management function, LMF). Another communications system is used as an example. The positioning device 230 may be a location management unit (location management unit, LMU), a location management center (location management center, LMC), or an evolved serving mobile location center (evolved serving mobile location center, E-SMLC). It may be understood that, the positioning device 230 may alternatively be another network element, node or device for determining location information about a terminal device, for example, may be a network element or node in a future communications system for determining location information about a terminal device, and a name of the positioning device is not specifically limited in embodiments of the present application.

Positioning in the communications system 200 includes uplink positioning and downlink positioning. In some communication systems (such as the NR system), downlink positioning is performed based on a positioning reference signal (positioning reference signal, PRS). The PRS, also referred to as a downlink positioning reference signal (downlink positioning reference signal, DL-PRS), is a reference signal for a positioning function. For example, in a downlink positioning process, the terminal device 220 may first measure PRSs transmitted by a serving cell and a neighboring cell (or a neighbor cell), and estimate related information of positioning and measurement. Then the terminal device 220 may report the related information of positioning and measurement to the positioning device 230 as measurement results of the PRSs. The positioning device 230 may calculate a location of the terminal device 220 based on the related information of positioning and measurement reported by the terminal device 220, so as to obtain the location information about the terminal device 220. For example, the positioning device 230 may calculate the location information about the terminal device 220 based on a trilateration method or a triangulation method.

In some communications systems (such as an NR system), uplink positioning is performed based on an SRS. For example, in an uplink positioning process, the terminal device 220 transmits a sounding reference signal (sounding reference signal, SRS). Network devices 210 (a network device of a serving cell and a network device of a neighboring cell) may obtain a measurement result based on the SRS transmitted by a terminal. The measurement result of the SRS may include related information of positioning and measurement. The network devices 210 may then transmit the related information of positioning and measurement to the positioning device 230. The positioning device 230 may calculate a location of the terminal device 220 based on the related information of positioning and measurement reported by the network devices 210, so as to obtain the location information about the terminal device 220. For example, the positioning device 230 may calculate the location information about the terminal device 220 based on a trilateration method or a triangulation method.

The related information of positioning and measurement may include one or more of the following information: time information, distance information, power information, or angle information. More specifically, the related information of positioning measurement may include one or more of the following information: a time difference of arrival (time difference of arrival, TDOA), an angle difference of arrival (angle difference of arrival, ADOA), a reference signal received power (reference signal received power, RSRP), and the like.

In some application scenarios, the terminal device is required to be positioned. Different application scenarios require different positioning accuracy. A positioning manner may be coarse positioning or fine positioning depending on different positioning accuracy. In some applications, coarse positioning information about a terminal device is required to be obtained, for example, an application for logistics monitoring, vehicle management, public safety, weather forecast, auxiliary navigation, or the like.

A common coarse positioning manner may include a cell identity (cell-id) -based positioning manner. An implementation principle thereof may be as follows: a positioning platform transmits signalling to a core network to query an ID of a cell where the terminal device is located. Then, the positioning platform may determine an approximate location of the terminal device based on data stored in a base station database. Positioning accuracy of this positioning manner depends on a size of a base station or a sector, and the positioning accuracy generally ranges from about hundreds to thousands of meters. Compared with high-accuracy positioning, a coarse positioning service has relatively low complexity.

TA-based positioning technology

TA reflects a delay of transmission from a terminal device to a network device (for example, a serving cell base station or a transmission point), that is, different terminal devices located at different locations will have different TA values. Therefore, a terminal device may be positioned by using a cell-id-based positioning manner with assistance of TA.

A network device may signal TA to a terminal device by using a timing advance command (timing advance command, TAC). The TAC has two variables, one is an initial timing advance instruction transmitted by using a random access response (random access response, RAR), and the other is a timing advance instruction transmitted by using a medium access control (media access control, MAC)-control element (control element, CE). The initial TAC transmitted by using the RAR is about 12 bits, and a value of the initial TAC ranges from 0 to 3846. The TAC transmitted by using the MAC-CE is about 6 bits, and a value of the TAC ranges from 0 to 63. TA may be controlled by a MAC layer and implemented by a physical layer.

A TA value may indicate a delay length from a terminal device to a network device, and delay accuracy depends on a quantization interval of the TA. The smaller the quantization interval of the TA, the smaller the time interval indicated by TA, and therefore, higher transmission delay accuracy may be indicated. **In** different communication systems, quantization intervals of TA varies. For example, in LTE, a quantization interval of TA is fixed at 0.52 microseconds. For another example, in NR, a quantization interval of TA is related to a subcarrier spacing (subcarrier spacing, SCS). The subcarrier spacing may be determined by using a random access message 3. As shown in Table 1, as the subcarrier spacing increases, accuracy of a delay that may be indicated by using TA is improved, so that corresponding ranging accuracy can be improved.

Table 1

| SCS | TA quantization interval | Distance measurement error |
|---|---|---|
| 15 kHz | 0.52 $\mu$s | 78 m |
| 30 kHz | 0.26 $\mu$s | 39 m |
| 60 kHz | 0.13 $\mu$s | 19 m |
| 120 kHz | 0.07 $\mu$s | 10m |

Table 1 indicates an effect of the TA quantization interval on ranging accuracy. It may be learned from Table 1 that a maximum error in ranging using TA is 78 meters when a subcarrier spacing is 15 kHz. Therefore, in LTE, a maximum ranging error corresponding to a quantization interval of 0.52 $\mu$s of TA is also 78 meters.

When the subcarrier spacing is 15 kHz, according to a TA reporting capability, even if there is a line of sight between a terminal device and a positioning device, a distance obtained by the terminal device or the positioning server through TA conversion may still have an error of 78 meters.

An LTE system is used as an example. When users in a cell are evenly distributed, a maximum ranging error is 78 meters, and an average ranging error is 39 meters. **In** other words, in an LTE system, an average error between a distance measured by using TA and an actual distance is 39 meters. **In** actual application, considering a case of non line of sight (non line of sight, NLoS), the average error between the distance measured by using TA and the actual distance is greater than 39 meters.

Path loss-based positioning technology

As mentioned above, the cell-id-based positioning technology has a problem of low positioning accuracy. To improve positioning accuracy, an unspecified requirement measurement quantity such as a signal measurement result may be further used to assist cell-id-based positioning. For example, to monitor a connection state, a reference signal received power (reference signal received power, RSRP) measured by a terminal device belongs to the signal measurement result.

The unspecified requirement measurement quantity may be a measurement performed by the terminal device to maintain a connection, or a parameter notified by a network device to the terminal device. The unspecified requirement measurement quantity may be obtained through measurement performed by the terminal device, or may be obtained through measurement performed by a base station. The unspecified requirement measurement quantity may be periodically obtained, and may not depend on a specific service, or may not require a complex service request from a network device or a terminal device. In some cases, the network device or the terminal device does not support some specific services, and thus measurement quantities for these services cannot be obtained.

Further, a radio resource control (radio resource control, RRC) state of a terminal device may not be considered in measurement of the unspecified requirement measurement quantity. In other words, the terminal device may still obtain the unspecified requirement measurement quantity even in an RRC idle state.

A path loss occurred from a network device to a terminal device may be determined by using a signal measurement result, and a distance between the network device and the terminal device may be obtained through conversion according to the path loss. For example, when positioning is performed by using an RSRP, a path loss (path loss) may be obtained through calculation according to a difference between the RSRP and a transmit power, and a distance may be obtained by substituting an actual path loss into a relationship between a path loss and a distance.

In conclusion, positioning assisted with a signal measurement result may be applied to a plurality of states. A terminal device is not required to enter an RRC connected state, and a specific function is not required to be enabled by a network device or the terminal device. However, positioning based on a signal measurement result also has accuracy problems.

The following describes a process of path loss-based positioning by using an example in which the signal measurement result is an RSRP.

During positioning processing, a positioning device may estimate a path loss of a network device based on an RSRP corresponding to the network device, and then determine a distance between a terminal device and the network device based on a relationship between the path loss and a distance. Further, the positioning device performs location calculation to obtain location information about the terminal device. For example, the positioning device may determine the location information about the terminal device based on the distance between the terminal device and the network device and location information of the network device.

In some embodiments, the positioning device may obtain path loss information based on a difference between a transmit power and a received power (such as an RSRP) of a reference signal. The relationship between a path loss and a distance described above is also referred to as a distance fitting formula below. The distance fitting formula may be determined based on the fitting of a large quantity of path losses and accurate distances between the terminal device and the network device.

In a conversion from distance to path loss, many factors need to be considered, such as a height of the network device, a height of the terminal device, a usage scenario, whether transmission from the terminal device to the network device is line-of-sight transmission or non-line-of-sight transmission, a signal bandwidth of the network device, an operating frequency of the network device, and a penetration loss. Under different influence factors, the relationship between distance and path loss varies.

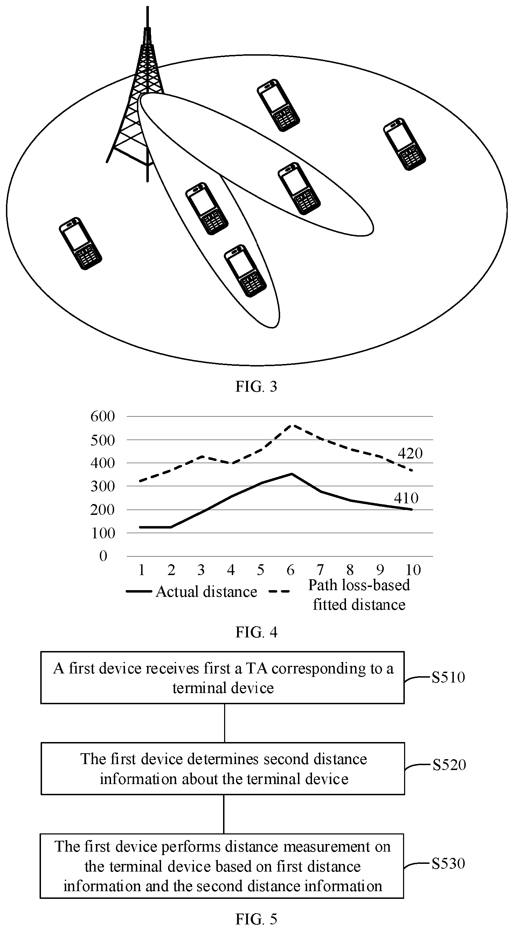

When the network device uses beamforming, different beamforming gains are obtained for antennas of terminal devices in different directions, as shown in FIG. 3. When the transmit power and path loss are the same, in theory, received powers of terminal devices in different directions should be the same. However, because of an impact of beamforming, the network device has different antenna gains in different directions, and thus terminal devices in two different directions have different received powers.

After receiving a signal transmitted by the network device, a terminal device may perform power estimation. Accurate path loss information may be obtained by subtracting an impact of an antenna gain from a difference between a power of a received signal and a power of a transmitted signal. However, because a direction of the terminal device relative to the network device is unknown, an antenna gain is also unknown, and thus accurate path loss information cannot be obtained. Therefore, path loss estimation may contain information about the antenna gain, and thus the path loss estimation includes an error from the antenna gain. In some cases, antenna gains of the network device in various directions are also unknown. Therefore, the impact of the antenna gain can only be reflected in the path loss, resulting in inaccurate path loss information. Because accurate path loss information cannot be obtained, distance information determined based on the path loss information are also inaccurate. Further, relatively low ranging accuracy affects positioning accuracy for the terminal device.

The situation in an actual network is more complex, and in one measurement, a terminal device may detect RSRPs for a plurality of network devices. Because the network devices have different parameters, it is impossible to obtain all the parameters of the network device during fitting, resulting in a large fitting error.

In addition, the network devices may have different coverage ranges, and the coverage ranges of the network devices may affect the distance fitting formula. Different distance fitting formulas should be used for different coverage ranges. For a device that performs distance fitting, the device does not know a coverage range of the network device or a distance between the network device and the terminal device, and it is thus difficult to select a proper distance fitting formula. In other words, a device such as a positioning server cannot obtain comprehensive and accurate information about the network devices and signals, and therefore, an accurate fitting relationship between a path loss and a distance cannot be obtained.

FIG. 4 shows a comparison graph of a path loss-based fitted distance and an actual distance. As shown in FIG. 4, because an accurate distance fitting formula cannot be obtained, an error between an actual distance curve 410 and a path loss-based fitted distance curve 420 ranges from 150 meters to 250 meters. Therefore, a fitted distance obtained based on an actual path loss and a distance fitting formula shown in FIG. 4 has relatively low accuracy when used for positioning.

In conclusion, a relationship between a path loss and a distance greatly varies with a network device that transmits a signal and a location of a terminal device, and thus there is a relatively large uncertainty in fitting, thereby further affecting accuracy of position calculation.

It may be learned from the foregoing that, in both the TA-based positioning technology and the path loss-based positioning technology, a distance measurement is first performed on a terminal device, and then positioning is performed on the terminal device based on a result of the distance measurement. TA-based ranging has relatively low complexity, and a connection status of a terminal device does not need to be considered for path loss-based ranging. However, there is a relatively large error when ranging is performed on the terminal device by using these parameters, and the relatively large error for the ranging causes relatively low positioning accuracy. In single-station positioning, a distance measurement value is used for positioning, and ranging accuracy may also be referred to as positioning accuracy.

Therefore, how to improve ranging accuracy for a terminal device needs to be resolved.

Based on this, an embodiment of the present application provides a ranging method. By this method, the ranging accuracy for the terminal device may be further improved based on the TA-based ranging or path loss-based ranging described above. With reference to FIG. 5, the following describes in detail a ranging method according to an embodiment of the present application.

Referring to FIG. 5, in Step S510, a first device receives a first TA corresponding to a terminal device.

The first device may be a plurality of types of communications devices that perform distance estimation on the terminal device. In some embodiments, the first device may be the positioning device shown in FIG. 2, namely, a positioning server, such as an LMF. In some embodiments, the first device may be a terminal device that is to be positioned, or may be another terminal device that is to be positioned, for example, a reduced-capability (RedCap) device. In some embodiments, the first device may be a positioning server of a third party, for example, a related device for a positioning mechanism to which a non-operator belongs or positioning software to provide a positioning service.

The first device receiving the first TA corresponding to the terminal device may refer to that the first device directly receives the first TA from a network device, or may refer to that the first device receives and detects the first TA that may be used for positioning, so as to determine distance information between the terminal device and the network device. When the first device is a positioning server, the first device receiving the first TA may further include that the first device receives and detects a TA quantization interval corresponding to the first TA. For brevity, the TA quantization interval corresponding to the first TA may be referred to as a first quantization interval.

The first TA may be used for determining first distance information about the terminal device based on the first quantization interval. For example, the first distance information may be a distance between the network device and the terminal device that is determined based on the first TA. For another example, the first distance information may be information that is obtained based on a distance corresponding to the first TA and is related to a distance fitting formula. For another example, the first distance information may be location information of the terminal device determined based on a plurality of first TAs.

The first device may obtain the first TA in a plurality of manners. In some embodiments, the first device may initiate a positioning service request to the network device, and the network device (or a serving cell) may signal the first TA to the first device. In some embodiments, after obtaining a value of the first TA, the network device directly notifies the first device. In some embodiments, the first TA is indicated to the terminal device by the network device via a TAC.

In some embodiments, when transmitting the first TA to the first device, the network device may simultaneously transmit a measurement time corresponding to the first TA, to improve accuracy of the first distance information. The measurement time corresponding to the first TA may be a time for access measurement, or may be a time for updating TA. For a mobile terminal device, a time at which a positioning requirement is initiated may be different from a time for accessing TA measurement or a time for updating TA. The first device may obtain a current location of the terminal device through TA measurement time or TA update time in combination with a moving speed and direction of the terminal device. In other words, the measurement time of the first TA may be used for determining the first distance information based on movement information of a mobile device.

In a possible implementation, the measurement time corresponding to the first TA may be a time at which a base station receives an uplink pilot used for measuring TA. The first device may transmit the uplink pilot to the base station. After receiving the pilot and performing measurement on the first TA, the base station transmits TA.

In a possible implementation, when the first device is a positioning server, the terminal device may directly report a moving speed and direction information to the positioning server. In another possible implementation, the positioning server may obtain the moving speed and the direction information of the terminal device by comparing measurement values obtained before and after movement. In still another possible implementation, the positioning server may obtain movement information by comparing derived values of measurement values obtained before and after movement.

In some embodiments, when the first device is a positioning server, and when moving speed and direction information of the terminal device is not known, the positioning server may directly obtain a distance value of the terminal device based on a measurement value of the first TA. The distance value may be used for coarse positioning of the terminal device.

The first quantization interval may be determined based on the subcarrier spacing for communication between the terminal device and the network device. It may be learned from the foregoing description that, the subcarrier spacing may be determined based on a random access message 3 of the terminal device. In other words, the first TA may be an actual communication parameter between the network device and the terminal device. The first device may obtain, based on the first TA and the first quantization interval, the first distance information corresponding to the first TA.

The first distance information may include a first distance between the terminal device and the network device. In some embodiments, the first distance may be directly determined based on the first TA and the first quantization interval. For example, when the first TA received by the first device is 2, and a distance corresponding to the first quantization interval is 78 meters shown in Table 1, the first distance may be 156 meters.

In a possible implementation, the first distance may be greater than an actual distance between the terminal device and the network device, or may be less than the actual distance, or the first distance may be equal to the actual distance.

In Step S520, the first device determines second distance information of the terminal device.

The second distance information may be determined based on one or more pieces of information. The more pieces of information include, for example, a path loss corresponding to the terminal device, and a second TA whose quantization interval is less than the first TA.

A TA quantization interval (a second quantization interval) corresponding to the second TA is less than the first quantization interval, so that distance information with higher accuracy may be obtained. A distance of 100 meters is used as an example. It is assumed that when the first quantization interval is 0.5 microsecond, a value of the first TA is 1, a distance obtained is 75 meters, and there is a ranging error of 25 meters. It is assumed that when the second quantization interval is 0.1 microsecond, a value of the second TA may be 2, a distance obtained with reference to the first TA and the second TA is 105 meters, and the ranging error is 5 meters. The value of the second TA may alternatively be 7, a distance obtained only based on the second TA is 105 meters, and the ranging error is also 5 meters. **In** other words, whether joint ranging is performed with reference to the first TA and the second TA, or ranging is performed only based on the second TA, ranging accuracy is always higher than that for ranging based only on the first TA. Thus, it can be learned that, the second quantization interval being less than the first quantization interval helps improve ranging accuracy.

**In** some embodiments, when estimating TA, the base station estimates an uplink pilot or preamble sequence transmitted by the terminal device, and the accuracy of a timing advance corresponding to the terminal device that is estimated by the base station is higher than a quantization interval of the TA. For example, if the timing advance is represented as a distance, a distance error estimated by the base station is 10 meters, and the error based on the quantization interval of the TA may be about 40 meters. Therefore, the base station signals the first device based on a smaller quantization interval, so that a ranging result may be represented more accurately.

The second quantization interval may be determined by using one or more pieces of information. The more pieces of information include, for example, ranging accuracy of the terminal device, a subcarrier spacing corresponding to the first TA, and a ratio of the TA quantization interval corresponding to the second TA to the TA quantization interval corresponding to the first TA.

In some embodiments, the second quantization interval may be determined based on ranging accuracy or positioning accuracy of the terminal device. In actual application, some terminal devices have high positioning accuracy, and some terminal devices have low positioning accuracy. Therefore, the second quantization interval may have different values for different terminal devices. For example, for a terminal device with high positioning accuracy, the second quantization interval may be relatively low.

In some embodiments, the second quantization interval may be determined based on the subcarrier spacings corresponding to the first TA. A plurality of candidate values of the second quantization interval may be determined based on the subcarrier spacings corresponding to the first TA, and the candidate values correspond to the subcarrier spacings corresponding to the first TA.

In some embodiments, the second quantization interval may be determined based on the ratio of the second quantization interval to the first quantization interval. In a possible implementation, a protocol may directly specify that the ratio of the second quantization interval to the first quantization interval is 1/4. In another possible implementation, a protocol may specify how to derive the ratio of the second quantization interval to the first quantization interval by using a parameter of wireless communication. In still another possible implementation, the ratio of the second quantization interval to the first quantization interval may be selected from a plurality of candidate values, and is indicated by using an index of the candidate value. For example, SIB 1 may indicate a sequence number that corresponds to a candidate ratio. For example, SIB 1 may indicate that sequence numbers corresponding to candidate ratios are 0, 1, 2, and 3, which are respectively corresponding to 1/2 first quantization interval, 1/4 first quantization interval, 1/8 first quantization interval, and 1/16 first quantization interval.

In some embodiments, the second quantization interval may be determined based on the a plurality pieces of foregoing information. For example, for a terminal device with low ranging accuracy, the second quantization interval may be a value selected from the plurality of candidate values and having a relatively large second quantization interval.

The second quantization interval may be notified by the network device to the first device. In some embodiments, indication information on the second quantization interval may be carried in broadcast information. The first device may determine, based on the received broadcast information, a measurement distance corresponding to the second quantization interval. For example, the second quantization interval may be notified by using a system information block 1 (system information block, SIB 1). In some embodiments, the network device may indicate the second quantization interval to the positioning server by using NR positioning protocol a (NR positioning protocol a, NRPPa) signalling. In some embodiments, the first device may request the second quantization interval from the network device. The network device transmitted the second quantization interval and/or the second TA according to the request of the first device.

The second TA may be transmitted to the first device in a plurality of manners. In some embodiments, the network device may indicate the second TA to the terminal device by using MAC signalling. In some embodiments, after the network device notifies the terminal device of the second TA, the terminal device may report the second TA to the positioning server by using LTE positioning protocol (LTE positioning protocol, LPP) signalling. In some embodiments, the network device may indicate the second TA to the positioning server by using NRPPa signalling. In some embodiments, the first device may request the second TA from the network device. The network device transmits the second TA according to the request of the first device. The first device may receive the second TA indicated by the network device, so as to determine the second distance information. In some embodiments, the second quantization interval may be transmitted together with the second TA. In other words, the first device may request the second TA and/or the second quantization interval from the network device. The network device may transmit the second TA and/or the second quantization interval according to the request of the first device.

In a possible implementation, when transmitting the second TA to the first device, the network device may also transmit a measurement time corresponding to the second TA. The measurement time may be a time at which a base station receives an uplink pilot used for measuring TA. The first device may transmit the uplink pilot to the base station, and the base station receives the pilot, measures the second TA, and transmits the measured second TA.

The second distance information may be determined based on a path loss corresponding to the terminal device. In some embodiments, the path loss may be used for determining a distance between the network device and the terminal device with reference to a distance fitting formula. In some embodiments, the path loss may be used for determining more accurate distance information based on the first distance in the first distance information.

The terminal device may further determine a corresponding path loss based on a signal measurement result (for example, an RSRP). For example, the terminal device may determine the path loss based on a difference between a power for the network device to transmit a signal and an RSRP. In some embodiments, when the first device is a positioning server, after transmitting a positioning service request, the terminal device may transmit the path loss to the positioning server, or the terminal device may directly report the path loss to the positioning server.

In some embodiments, the first device may determine a distance between the terminal device and the network device based on a path loss and a distance fitting formula. The path loss and the distance fitting formula may be based on information about a serving cell corresponding to the terminal device, or may be based on information about a neighboring cell corresponding to the terminal device.

In Step S530, the first device performs distance measurement on the terminal device based on the first distance information and the second distance information.

It may be learned from the foregoing description that an approximate distance between the terminal device and the network device may be determined according to the first distance information determined based on the first TA, that is, coarse positioning is performed on the terminal device. The second distance information may be used for performing more accurate distance measurement on the terminal device based on the first distance information.

In some embodiments, the second distance information may include a second distance between the terminal device and the network device. The first device may determine the distance between the network device and the terminal device based on the first distance and the second distance, so as to perform distance measurement on the terminal device. In other words, the first device may determine the distance between the terminal device and the network device based on the first TA and the second TA. For example, the first distance and the second distance are respectively two non-overlapping distances between the network device and the terminal device, and a final distance may be obtained by adding the two distances. In other words, a sum of the first distance and the second distance may be used as a result of distance measurement. For another example, the first distance and the second distance are respectively two overlapping distances between the network device and the terminal device, and a final distance may be obtained by subtracting the overlapping part. In other words, a difference between the first distance and the second distance may be used as the result of distance measurement. For another example, the result of distance measurement may be determined based on the second distance.

In some embodiments, the first distance information may include a first distance determined based on the first TA, and the second distance information may include the path loss corresponding to the terminal device. Because a quantization interval corresponding to the first TA is large, an error between the first distance and an actual distance is relatively large. In other words, the first distance may be used for determining an approximate range of the terminal device. Although the path loss has a relatively large error, the path loss has a specific correspondence with respect to a distance. In other words, a corresponding distance interval may be determined based on a path loss change interval. After the first distance is determined, the first device may determine, based on the path loss change interval, whether the actual distance is greater than the first distance or less than the first distance, so as to determine relatively accurate location information of the terminal device.

In a possible implementation, the first device may determine a more accurate third distance between the terminal device and the network device based on the first distance and a first distance fitting formula. The third distance may be used as a distance measurement result, so as to position the terminal device. The first distance fitting formula is used for determining a distance between the terminal device and the network device based on a path loss.

In a possible implementation, the first device may determine a first distance interval based on the first distance, and the first distance interval may include a plurality of distance intervals, namely, a plurality of second distance intervals. The first device may further determine, by using the first distance fitting formula, a plurality of path loss change intervals that are in a one-to-one correspondence with the plurality of second distance intervals. In other words, each second distance interval in the first distance interval has a corresponding path loss range. According to an actual path loss value of the terminal device, a path loss change interval in which the path loss is located may be determined, so as to determine a second distance interval corresponding to the path loss. A third distance may be determined based on the second distance interval corresponding to the path loss. For example, the third distance may be determined based on a midpoint of the second distance interval corresponding to the path loss. For example, the third distance is a distance corresponding to the midpoint of the second distance interval. Compared with the first distance, the third distance is closer to the actual distance between the terminal device and the network device. For another example, the third distance may be determined based on a set location of the second distance interval corresponding to the path loss.

In a possible implementation, the first distance interval may include a plurality of second distance intervals of an equal distance or different distances. The plurality of second distance intervals may further be determined based on one or more pieces of information. The plurality of pieces of information may be ranging accuracy or positioning accuracy of the terminal device, may be a width of the first distance interval, may be the first distance fitting formula, or the like. A quantity of the plurality of distance intervals may be an integer greater than or equal to 2. The more the second distance intervals, the higher the positioning accuracy of the terminal device.

In a possible implementation, the first distance interval may be determined based on the first distance and a first quantization interval. A ranging error corresponding to the first quantization interval may be used for determining a value range of the first distance interval. For example, the first distance interval may be half of the ranging error. In another possible implementation, the second distance interval may directly meet $[D-0.5 \times \Delta d, D+0.5 \times \Delta d]$, where D denotes the first distance, and $\Delta d$ denotes a distance corresponding to the first TA when the first TA is 1 (a ranging error corresponding to the first quantization interval).

In some embodiments, when the second distance information is determined based on the path loss, the first distance information may be used for correcting a distance fitting formula. It may be learned from the foregoing description that, a path loss obtained based on a detected power is affected by a plurality of influencing factors. Therefore, a distance obtained based on the path loss and the distance fitting formula is greater than an actual distance. The error shown in FIG. 4 reaches 150 to 250 meters, and a distance obtained in another positioning manner may be used to correct the distance fitting formula. For example, when a subcarrier spacing is 15 kHz, a TA-based ranging error is up to 78 meters, that is to say, TA ranging error is less than an error resulted from the distance fitting formula shown in FIG. 4. Therefore, a parameter determined by using the first TA may be added to the distance fitting formula, so as to improve accuracy of the distance fitting formula.

In a possible implementation, the first device may correct, based on the first TA, the first distance fitting formula corresponding to the network device to obtain a second distance fitting formula, where the second distance fitting formula is used for positioning the terminal device based on the path loss.

In a possible implementation, the first distance fitting formula may be corrected by using the first TA, or may be corrected by using a plurality of TAs, where the plurality of TAs include the first TA. The plurality of TAs may correspond to a plurality of TA distances between a plurality of different locations and the network device. The plurality of different locations mean there are a plurality of path losses.

Specifically, the first device may determine a plurality of fitting distances based on the plurality of path losses and the first distance fitting formula. The plurality of fitting distances may be in a one-to-one correspondence with the plurality of TA distances. The second distance fitting formula may be determined based on the plurality of fitting distances and the plurality of TA distances. For example, correction may be performed directly by determining a plurality of differences between the plurality of fitting distances and the corresponding plurality of TA distances. For another example, correction may be performed by using an average value of a plurality of differences. For another example, the second distance fitting formula may be obtained by subtracting the average value of the plurality of differences in the first distance fitting formula.

In some embodiments, the second distance information may alternatively be a path loss of a neighboring cell corresponding to the terminal device, so as to correct a distance fitting formula of the neighboring cell based on the first distance information. In other words, the network device belongs to the neighboring cell corresponding to the terminal device, and the first distance fitting formula is a distance fitting formula corresponding to the neighboring cell. If the distance fitting formula of the neighboring cell is to be corrected by using the first TA of the serving cell, a distance between the neighboring cell and the serving cell cannot be too far.

In a possible implementation, when the neighboring cell meets a first condition, the first device may correct, based on the first TA, the first distance fitting formula corresponding to the neighboring cell to obtain the second distance fitting formula. The second distance fitting formula may be used for positioning the terminal device based on a path loss between the terminal device and the neighboring cell. For example, the first condition may include that a distance between the neighboring cell and the serving cell is less than a first threshold. The first threshold may be determined based on an actual situation.

In a possible implementation, the first device may determine first location information corresponding to the terminal device, and then determine second location information based on the first location information and the first TA. The second location information is used for correcting the first distance fitting formula corresponding to the neighboring cell. The first location information may be determined based on a distance fitting formula of the serving cell, or may be determined in another positioning manner. The second location information may be a point closest to a first location of the terminal device, and a distance from the point to the network device is a distance corresponding to the first TA. In other words, a distance from a second location to the network device as is indicated by the second location information should be an integer multiple of a distance corresponding to the first quantization interval. For example, a distance between a position corresponding to the second location information and a position corresponding to the first location information may be less than a fourth distance, where the fourth distance is a corresponding distance when the first TA is 1, namely, a distance corresponding to the first quantization interval.

In a possible implementation, the first device may determine a fifth distance between the terminal device and the neighboring cell based on the second location information. The second distance fitting formula may be determined by correcting the first distance fitting formula with the fifth distance.

A specific method for positioning the terminal device by the first device based on the first distance information and the second distance information is described in more detail with reference to embodiments.

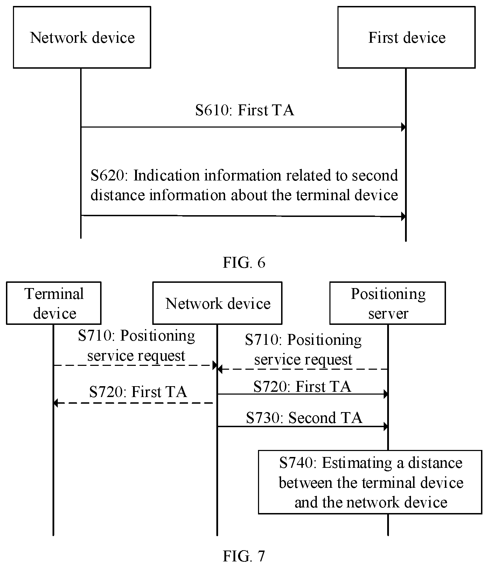

With reference to FIG. 5, the foregoing describes a ranging method in a perspective of a first device according to an embodiment of the present application. With reference to FIG. 6, the following describes a ranging method in a perspective of a network device according to an embodiment of the present application. Compared with the method for the positioning device or the terminal device in FIG. 5, the method shown in FIG. 6 is a ranging method for a network device. Therefore, for brevity, the terms already present in FIG. 5 are not explained in detail in FIG. 6.

The ranging method illustrated in FIG. 6 is described from a perspective of interaction between a network device and a terminal device.

Referring to FIG. 6, in Step S610, a network device transmits a first TA corresponding to a terminal device. The first TA is used for determining first distance information based on a corresponding first quantization interval. For a mobile terminal device, when transmitting the first TA, the network device simultaneously transmits a measurement time corresponding to the first TA, so that the first distance information may be determined based on movement information of the terminal device.

In Step S620, the network device transmits indication information related to second distance information about the terminal device. The second distance information is determined based on second TA, and a second quantization interval corresponding to the second TA is less than the first quantization interval. The first distance information and the second distance information are used for performing distance measurement on the terminal device.

In some embodiments, the indication information related to the second distance information about the terminal device may be the second TA. The network device may directly transmit the second TA to a first device. In some embodiments, the indication information related to the second distance information about the terminal device may include the second TA and the second quantization interval. When the first device is a terminal device, the network device may directly notify the terminal device. When the first device is a positioning server, the network device may notify the positioning server by using NRPPa signalling. In some embodiments, the indication information related to the second distance information about the terminal device may alternatively be a correction parameter determined based on the second TA, for example, a corrected distance based on the first distance.

FIG. 5 and FIG. 6 describe a ranging method according to an embodiment of the present application from perspectives of a first device and a network device, respectively. According to the ranging method, an approximate range of a distance between the terminal device and the network device may be determined by using a first TA, and then the distance between the terminal device and the network device is further estimated by using a second TA or a path loss. The path loss may be obtained by measuring an RSRP. In actual application, the terminal device may measure not only an RSRP of a serving cell, but also an RSRP of a neighboring cell, and may further optimize the distance between the terminal device and the network device by using an ID and the RSRP of the neighboring cell.

To describe the present application more clearly, the following describes a plurality of possible implementations of the present application in detail with reference to FIG. 7 to FIG. 11 in a form of a plurality of embodiments.

Embodiment 1

When the second distance information is determined based on the second TA, in this embodiment, the terminal device may be positioned based on a TA with a smaller quantization interval. The TA with a smaller quantization interval may also be referred to as a small-granularity TA.

In this embodiment, the terminal device is positioned by using a positioning server. With reference to FIG. 7, the following describes a TA-based high-accuracy positioning method in this embodiment. FIG. 7 shows the method from a perspective of interaction among a terminal device, a network device, and a positioning server. A dashed line indicates that the procedure is optional.

Referring to FIG. 7, in Step S710, the positioning server or the terminal device transmits a positioning service request to the network device.

In Step S720, the network device (or a serving cell) indicates a first TA to the positioning server or the terminal device. The first TA may be used for estimating a distance from the terminal device to the network device, namely, a first distance. Based on the first distance, high-accuracy positioning may be obtained with relatively small complexity.

In Step S730, the network device indicates second TA to the positioning server based on the first TA. The second TA may be used for estimating the remaining distance beyond the first distance, namely, a second distance. Therefore, the second distance is indicated by using a smaller TA granularity, and a more accurate distance may be obtained. The second TA may also be denoted as TA_s.

In Step S740, the positioning server estimates a distance between the terminal device and the network device based on distance information corresponding to the first TA and the second TA.

When detecting a preamble sequence based on UL synchronization, the network device may obtain a distance whose accuracy is higher than a first quantization interval by using an advanced synchronization estimation method (for example, a subspace method). However, the positioning based on the TA is determined based on a TA value and a corresponding distance. Therefore, the network device may determine the second TA and a corresponding second quantization interval based on this distance. For example, the distance from the terminal device to the network device is 115 meters, and the distance measured by the network device is 110 meters. When a granularity of the first TA is 78 meters, it is indicated to the terminal device or the positioning server in Step S720 that the first TA is 1, and thus the first TA being 1 corresponds to that the first distance from the terminal device to the network device is 78 meters. When a granularity of the second TA is 10 meters, it is indicated to the terminal device or the positioning server in Step S730 that the second TA is 3, and thus the second TA being 3 corresponds to that the second distance from the terminal device to the network device is 30 meters. Through the indicating of the TA in Step S720 and the TA in Step S730, the distance between the terminal device and the network device is 108 meters. Compared with the distance determined based on the first TA, an error in Embodiment 1 may be reduced by 30 meters.

Embodiment 2

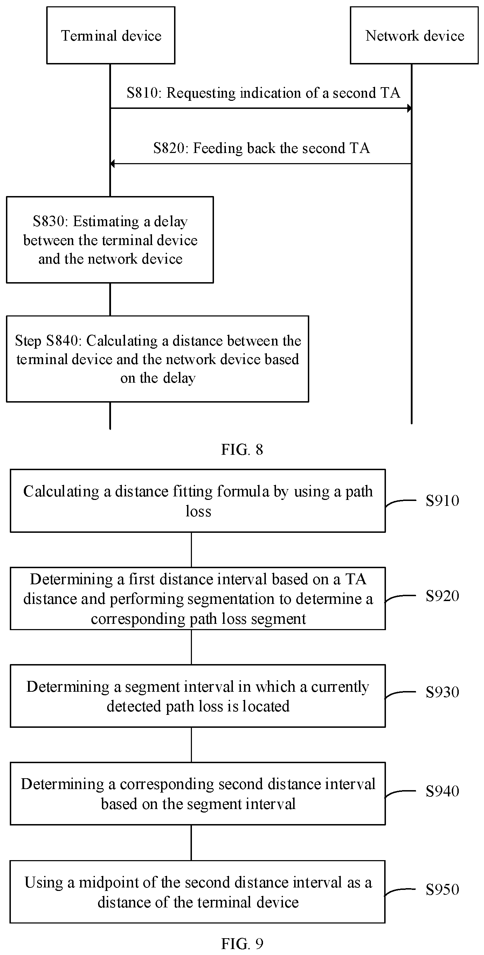

In this embodiment, the second distance information is still determined by using the second TA, but positioning is performed by the terminal device itself. With reference to FIG. 8, the following describes a ranging method in this embodiment. FIG. 8 shows the method from a perspective of interaction between a terminal device and a network device.

Referring to FIG. 8, in Step S810, the terminal device requests, from the network device, a second TA corresponding to a second quantization interval. The terminal device may request, from the network device, a TA indication with a smaller quantization interval when expecting to perform positioning by using TA, or when expecting to improve requirements such as TA synchronization accuracy.

In Step S820, the network device indicates the second TA to the terminal device through RRC signalling.

In Step S830, the terminal device estimates a delay between the terminal device and the network device based on the first TA and the second TA and with reference to a first quantization interval and the second quantization interval.

In Step S840, the terminal device calculates a distance between the terminal device and the network device based on the delay obtained in Step S830.

In actual application, when performing Step S830, the terminal device may directly estimate the delay based on the second TA and the second quantization interval. In other words, the terminal device may request a quantization interval that is different from a quantization interval corresponding to a subcarrier spacing so as to perform an assisted positioning, instead of using the quantization spacing corresponding to the subcarrier spacing to perform the assisted positioning. In this case, the network device may directly indicate the corresponding second TA based on the second quantization interval. The terminal device or the positioning server may determine a distance between the network device and the terminal device based on the second TA, so as to improve positioning accuracy by improving ranging accuracy.

Embodiment 3

As mentioned above, although having a large error, a path loss may be used to correct TA-based ranging. In this embodiment, first distance information is determined based on a first TA, and second distance information is determined based on the path loss. Specifically, a first device may receive the first TA and determine a path loss corresponding to a terminal device. The first TA may be used in conjunction with a first quantization interval for determining the first distance information. The path loss may be used for determining the second distance information according to a distance fitting formula. With reference to FIG. 9, the following describes a ranging method in this embodiment.

Referring to FIG. 9, in Step S910, a distance fitting formula is calculated by using a path loss. The distance fitting formula is the first distance fitting formula described above. A first device may determine the distance fitting formula based on a plurality of path losses and actual distances.

In Step S920, a first distance interval is determined based on a TA distance, and is segmented to determine corresponding path loss segments. The TA distance may be a distance determined based on a first TA, or may be a TA distance determined according to the method in Embodiment 1.

A distance interval is the first distance interval $[D-0.5 \times \Delta d, D+0.5 \times \Delta d]$. A plurality of second distance intervals may be obtained by segmenting the first distance interval. A corresponding path loss segment may be a path loss range obtained based on a distance, and the plurality of second distance intervals may correspond to a plurality of path loss change intervals.

In Step S930, a segment interval in which a currently detected path loss is located is determined. The segment interval is a path loss change interval in which a measured path loss is located.

In Step S940, a corresponding second distance interval is determined based on the segment interval. The second distance interval corresponding to the detected path loss may be determined by using the path loss change interval.

In Step S950, a midpoint of the second distance interval is used as a distance of the terminal device. When the midpoint of the second distance interval corresponding to the path loss is used as a final distance, which may be closer to an actual distance, thereby reducing a ranging error.

Embodiment 4

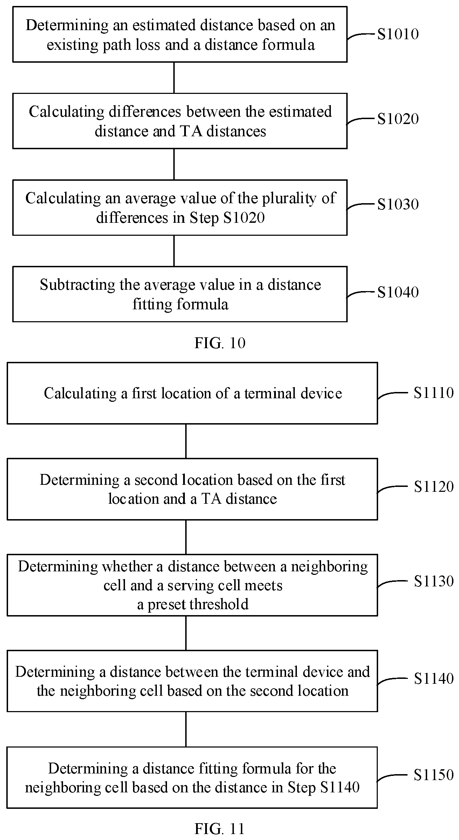

In this embodiment, a TA value is used to assist path loss-based positioning. In other words, a distance fitting formula based on a path loss is corrected by using a distance corresponding to the TA value. By means of correction, a relatively accurate distance fitting formula may be obtained. Therefore, second distance information is determined based on the path loss. With reference to FIG. 10, the following describes a ranging method in this embodiment.

Referring to FIG. 10, in Step S1010, an estimated distance is determined based on an existing path loss and a distance formula. The estimated distance is also the fitting distance described in this specification. The existing path loss may be a plurality of known path losses, and the plurality of path losses correspond to a plurality of different locations in a coverage range of a network device. **In** different locations, there will be different first TAs. A plurality of TA distances corresponding to the estimated distance may be obtained based on the first TAs for different locations.

**In** Step S1020, differences between the estimated distance and TA distances are calculated. A plurality of differences may be obtained based on the estimated distance and corresponding TA distances. The difference may reflect that a TA distance is closer to an actual distance than the estimated distance.

In Step S1030, an average value of the plurality of differences in Step S1020 is calculated. The purpose of averaging the plurality of differences and correcting a distance fitting formula by using the average value is to simplify complexity of an operation. In actual application, other statistical processing may be further performed on the plurality of differences, and the result is used to correct the distance fitting formula.

In Step S1040, the average value is subtracted in the distance fitting formula. It may be learned from the foregoing description that, because a path loss is caused by a plurality of influencing factors, and a fitting distance obtained according to the distance fitting formula is far greater than an actual distance, and the fitted distance can be made closer to the actual distance by removing the average value.

A first device may more accurately locate the terminal device by using a corrected distance fitting formula and a path loss corresponding to the terminal device.

Embodiment 5

In this embodiment, a network device related to a distance fitting formula is a neighboring cell corresponding to a terminal device. Compared with a serving cell, the neighboring cell does not directly communicate with the terminal device, and thus corresponding first TA cannot be obtained. In this embodiment, a first device may correct a distance fitting formula for the neighboring cell by using the first TA of the serving cell.

It may be learned from the foregoing description that, when performing measurement, the terminal device may not only obtain a signal measurement result of the serving cell, but also obtain a signal measurement result of the neighboring cell. A path loss obtained from an RSRP is used as an example. The terminal device may obtain RSRPs of a plurality of cells, and the terminal device may be positioned by determining distances between the terminal device and the plurality of cells. However, there is also a relatively large error in a path loss of a neighboring cell and a distance fitting formula corresponding to the neighboring cell. With reference to FIG. 11, the following describes a ranging method in this embodiment.

Referring to FIG. 11, in Step S1110, a first location of a terminal device is calculated. The first location may be estimated by using a distance fitting formula of a serving cell, or may be determined in another manner.

In Step S1120, a second location is determined based on the first location and a TA distance. In other words, a new location is determined based on the location in Step S1110. The new location is a point closest to the first location, and the distance from the point to the serving cell is a distance corresponding to TA. The distance corresponding to the TA is determined based on a TA value and a quantization interval corresponding to the TA.

Step S1130: Whether a distance between a neighboring cell and the serving cell meets a preset threshold is determined. The preset threshold may be the first threshold described above, or different thresholds may be set for different neighboring cells according to an actual situation. The distance between the neighboring cell and the serving cell is calculated. Only when the distance between the serving cell and the neighboring cell is less than the preset threshold, a fitting formula for the neighboring cell may be adjusted by using the TA of the serving cell.

In Step S1140, the distance between the terminal device and the neighboring cell is determined based on the second location.

In Step S1150, a distance fitting formula for the neighboring cell is determined based on the distance in Step S1140. The determining a new distance fitting formula based on the distance between the terminal device and the neighboring cell may include correcting an initial distance fitting formula for the neighboring cell according to the method described in Embodiment 4 or in another manner.

Therefore, the TA may be used for improving accuracy of a path loss fitting distance, which may be used for not only improving accuracy of a distance fitting formula corresponding to a serving cell, but also improving accuracy of a distance fitting formula corresponding to a neighboring cell.

It may be learned from the embodiments described above that, a solution for adjusting TA-based or path loss-based ranging is provided in embodiments of the present application, so that positioning or ranging performance may meet requirements of various scenarios. For example, the use of different TA granularities may meet requirements for different ranging accuracy. For another example, a TA value is used to assist a fitting measurement result with respect to an RSRP, so that a distance fitted by means of the RSRP is closer to an actual distance.

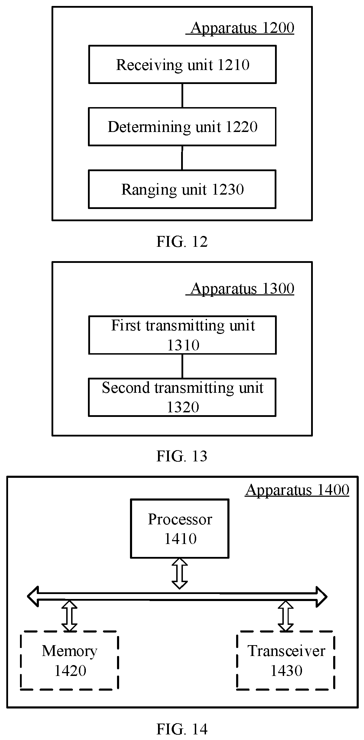

The foregoing describes the method embodiments of the present application in detail with reference to FIG. 5 to FIG. 11. The apparatus embodiments of the present application are described in detail below with reference to FIG. 12 to FIG. 14. It should be understood that the description of the apparatus embodiments corresponds to the description of the method embodiments, and therefore, for parts that are not described in detail, reference may be made to the foregoing method embodiments.

FIG. 12 is a schematic block diagram of a ranging apparatus according to an embodiment of the present application. The ranging apparatus may be the first device described above. The first device may be any one of the positioning devices or terminal devices described above. The apparatus 1200 shown in FIG. 12 includes a receiving unit 1210, a determining unit 1220, and a ranging unit 1230.

The receiving unit 1210 may be configured to receive a first TA corresponding to a terminal device, where the first TA is used for determining first distance information about the terminal device based on a TA quantization interval corresponding to the first TA, and the first distance information includes a first distance between the terminal device and a device.

The determining unit 1220 may be configured to determine second distance information about the terminal device.

The ranging unit 1230 may be configured to perform distance measurement on the terminal device based on the first distance information and the second distance information.

The second distance information is determined based on one or more of the following: a path loss corresponding to the terminal device; or second TA, where a TA quantization interval corresponding to the second TA is less than the TA quantization interval corresponding to the first TA.

Optionally, the receiving unit 1210 is further configured to: receive the second TA, and determine second distance information based on the second TA ad the TA quantization interval corresponding to the second TA.

Optionally, the TA quantization interval corresponding to the second TA is determined based on one or more of the following information: ranging accuracy of the terminal device, a subcarrier spacing corresponding to the first TA, or a ratio of the TA quantization interval corresponding to the second TA to the TA quantization interval corresponding to the first TA.

Optionally, indication information on the TA quantization interval corresponding to the second TA is carried in broadcast information.

Optionally, the receiving unit 1210 is further configured to receive, by means of NRPPa signalling, indication information on the second TA and/or indication information on the TA quantization interval corresponding to the second TA.

Optionally, the second distance information includes a second distance between the terminal device and the network device, and at least one of a sum of the first distance and the second distance or a difference between the first distance and the second distance is used as a result of the distance measurement.

Optionally, the first receiving unit is further configured to receive a measurement time corresponding to the first TA and/or the second TA, where the measurement time is a time at which a base station receives an uplink pilot used for TA measurement.

Optionally, the apparatus 1200 further includes a transmitting unit, configured to transmit, to the network device, a request for the second TA and/or the TA quantization interval corresponding to the second TA. The receiving unit 1210 is further configured to receive the second TA and/or the TA quantization interval corresponding to the second TA as indicated by the network device. The determining unit 1220 is further configured to determine the distance between the terminal device and the network device based on the first TA and the second TA.

Optionally, the determining unit 1220 is further configured to determine a path loss, where the path loss is used to determine the second distance information according to a first distance fitting formula, and the first distance fitting formula is used for determining the distance between the terminal device and the network device.

Optionally, the first distance information includes a first distance between the terminal device and the network device, and the determining unit 1220 is further configured to determine a third distance between the terminal device and the network device according to the first distance and the first distance fitting formula, where the third distance is used for performing distance measurement on the terminal device.

Optionally, the determining unit 1220 is further configured to: determine a first distance interval based on the first distance, where the first distance interval includes a plurality of second distance intervals; determine, by using the first distance fitting formula, a plurality of path loss change intervals that are in a one-to-one correspondence with the plurality of second distance intervals; and determine a third distance between the terminal device and the network device based on the first distance interval corresponding to the path loss, where the third distance is used as a result of the distance measurement.

Optionally, the first distance interval is determined based on the first distance and the TA quantization interval corresponding to the first TA.

Optionally, the plurality of second distance intervals are determined based on one or more of the following information: ranging accuracy for the terminal device; a width of the first distance interval, or the first distance fitting formula.

Optionally, the first distance interval meets the following relationship:

$$[D-0.5 \times \Delta d, D+0.5 \times \Delta d],$$

where D denotes the first distance, and $\Delta d$ denotes a distance corresponding to the first TA when the first TA is 1.

Optionally, the third distance is a distance corresponding to a midpoint of the first distance interval corresponding to the path loss.

Optionally, the second distance information is determined based on the path loss, and the apparatus 1200 further includes a first correction unit, which may be configured to correct, based on the first TA, the first distance fitting formula corresponding to the network device to obtain a second distance fitting formula, where the second distance fitting formula is used for positioning the terminal device based on the path loss.

Optionally, the first TA belongs to one of a plurality of TAs for correcting the first distance fitting formula, and the plurality of TAs are corresponding to a plurality of TA distances between a plurality of different locations and the network device.

Optionally, the plurality of different locations are corresponding to a plurality of path losses. The determining unit 1210 is further configured to: determine a plurality of fitting distances based on the plurality of path losses and the first distance fitting formula, where the plurality of fitting distances are in a one-to-one correspondence with the plurality of TA distances; and determine the second distance fitting formula based on the plurality of fitting distances and the plurality of TA distances.

Optionally, the determining unit 1220 is further configured to determine a plurality of differences between the plurality of fitting distances and the corresponding plurality of TA distances, and determine the second distance fitting formula based on the plurality of differences and the first distance fitting formula.

Optionally, the determining unit 1220 is further configured to: determine an average value of the plurality of differences, and determine the second distance fitting formula based on the average value and the first distance fitting formula.

Optionally, the network device belongs to a neighboring cell corresponding to the terminal device, and the first distance fitting formula is a distance fitting formula corresponding to the neighboring cell. The apparatus 1200 further includes a second correction unit, which may be configured to: in a case that the neighboring cell meets a first condition, correct the first distance fitting formula based on the first TA to obtain the second distance fitting formula, where the second distance fitting formula is used for positioning the terminal device based on a path loss between the terminal device and the neighboring cell.

Optionally, the first condition includes that a distance between the neighboring cell and a serving cell is less than a first threshold.

Optionally, the determining unit 1220 is further configured to: determine first location information corresponding to the terminal device; and determine, based on the first TA, second location information corresponding to the terminal device. A distance between a location corresponding to the second location information and a location corresponding to the first location information is less than a fourth distance, and the fourth distance is a distance corresponding to the first TA when the first TA is 1.

Optionally, the determining unit 1220 is further configured to: determine a fifth distance between the terminal device and a neighboring cell based on the second location information; and determine the second distance fitting formula based on the fifth distance and the first distance fitting formula.

FIG. 13 is a schematic block diagram of another ranging apparatus according to an embodiment of the present application. The ranging apparatus may be any network device described above. The apparatus 1300 shown in FIG. 13 includes a first transmitting unit 1310 and a second transmitting unit 1320.

The first transmitting unit 1310 is configured to transmit a first TA corresponding to a terminal device, where the first TA is used for determining first distance information based on a TA quantization interval corresponding to the first TA, and the first distance information includes a first distance between the terminal device and a network device.

The second transmitting unit is configured to transmit indication information related to second distance information about the terminal device, where the second distance information is determined based on a second TA, and a TA quantization interval corresponding to the second TA is less than the TA quantization interval corresponding to the first TA.

The first distance information and the second distance information are used for performing distance measurement on the terminal device.

Optionally, the TA quantization interval corresponding to the second TA is determined based on one or more of the following information: positioning accuracy for the terminal device, a subcarrier spacing corresponding to the first TA, or a ratio of the TA quantization interval corresponding to the second TA to the TA quantization interval corresponding to the first TA.

Optionally, indication information on the TA quantization interval corresponding to the second TA is carried in broadcast information.

Optionally, the second transmitting unit 1320 is further configured to transmit, to a positioning server by means of NRPPa signalling, indication information on the second TA and/or indication information on the TA quantization interval corresponding to the second TA.

Optionally, the second distance information includes a second distance between the terminal device and the network device, and at least one of a sum of the first distance and the second distance or a difference between the first distance and the second distance is used as a result of the distance measurement.

Optionally, the first transmitting unit 1310 is further configured to transmit a measurement time corresponding to the first TA and/or the second TA, where the measurement time is a time at which a base station receives an uplink pilot used for TA measurement.

Optionally, the apparatus 1300 further includes a receiving unit, configured to receive a request transmitted by a first device for the second TA and/or the TA quantization interval corresponding to the second TA; and the second transmitting unit 1320 is further configured to indicate, to the first device, the second TA and/or the TA quantization interval corresponding to the second TA.

FIG. 14 is a schematic structural diagram of a communications apparatus according to an embodiment of the present application. The dotted line in FIG. 14 indicates that the unit or module is optional. The apparatus 1400 may be configured to implement the method described in the foregoing method embodiments. The apparatus 1400 may be a chip or the positioning device, the terminal device, or the network device described above.

The apparatus 1400 may include one or more processors 1410. The processor 1410 may support the apparatus 1400 to implement the method described in the foregoing method embodiments. The processor 1410 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field-programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 1400 may further include one or more memories 1420. The memory 1420 stores a program, and the program may be executed by the processor 1410, so that the processor 1410 executes the method described in the foregoing method embodiments. The memory 1420 may be separate from or integrated into the processor 1410.

The apparatus 1400 may further include a transceiver 1430. The processor 1410 may communicate with another device or chip by using the transceiver 1430. For example, the processor 1410 may transmit data to and receive data from another device or chip through the transceiver 1430.

An embodiment of the present application further provides a computer-readable storage medium for storing a program. The computer-readable storage medium may be applied to the assisted positioning device, the to-be-measured device, or the network side device provided in embodiments of the present application, and the program causes a computer to execute the methods performed by the assisted positioning device, the to-be-measured device, or the network side device in various embodiments of the present application.

It should be understood that the computer-readable storage medium mentioned in this embodiment of the present application may be any usable medium readable by a computer, or a data storage device, such as a server or a data center, integrating one or more usable media. The usable medium may be a magnetic medium (for example, a floppy disk, a hard disk, or a magnetic tape), an optical medium (for example, a digital video disc (DVD)), a semiconductor medium (for example, a solid state drive (SSD)), or the like.

An embodiment of the present application further provides a computer program product. The computer program product includes a program. The computer program product may be applied to the assisted positioning device, the to-be-measured device, or the network side device provided in embodiments of the present application, and the program causes a computer to execute the methods performed by the assisted positioning device, the to-be-measured device, or the network side device in various embodiments of the present application.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to the embodiments of the present application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center via a wired (such as a coaxial cable, an optical fiber, and a digital subscriber line (DSL)) manner or a wireless (such as infrared, wireless, and microwave) manner.

An embodiment of the present application further provides a computer program. The computer program may be applied to the assisted positioning device, the to-be-measured device, or the network side device provided in embodiments of the present application, and the computer program causes a computer to execute the methods performed by the assisted positioning device, the to-be-measured device, or the network side device in various embodiments of the present application.

The terms "system" and "network" in the present application may be used interchangeably. In addition, the terms used in the present application are only used to explain the specific embodiments of the present application, and are not intended to limit the present application. The terms "first", "second", "third", "fourth", and the like in the specification, claims, and drawings of the present application are used to distinguish between different objects, rather than to describe a specific order. In addition, the terms "include" and "have" and any variations thereof are intended to cover a non-exclusive inclusion.

In embodiments of the present application, "indicate" mentioned herein may refer to a direct indication, or may refer to an indirect indication, or may mean that there is an association relationship. For example, A indicates B, which may mean that A directly indicates B, for example, B may be obtained by means of A; or may mean that A indirectly indicates B, for example, A indicates C, and B may be obtained by means of C; or may mean that there is an association relationship between A and B.

In embodiments of the present application, the term "corresponding" may mean that there is a direct or indirect correspondence between the two, or may mean that there is an association relationship between the two, which may also be a relationship such as indicating and being indicated, or configuring and being configured.

In embodiments of the present application, "pre-configured" may be implemented by prestoring corresponding codes, tables, or other forms that can be used to indicate related information in devices, and a specific implementation thereof is not limited in the present application.

In embodiments of the present application, the "protocol" may refer to a standard protocol in the communications field, and may include, for example, an LTE protocol, an NR protocol, and a related protocol applied to a future communications system, which is not limited in the present application.

In embodiments of the present application, determining B based on A does not mean determining B based only on A, but instead B may be determined based on A and/or other information.

In embodiments of the present application, the term "and/or" is merely an association relationship that describes associated objects, and represents that there may be three relationships. For example, A and/or B may represent three cases: only A exists, both A and B exist, and only B exists. In addition, the character "/" in the specification generally indicates an "or" relationship between the associated objects.

In the embodiments of the present application, sequence numbers of the foregoing processes do not mean execution sequences. The execution sequences of the processes should be determined according to functions and internal logic of the processes, and should not be construed as any limitation on the implementation processes of the embodiments of the present application.

In the several embodiments provided in the present application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interface, apparatuses or units, and may be implemented in electrical, mechanical, or other forms.

The units described as separate parts may or may not be physically separate, and parts displayed as units may or may not be physical units, and may be located at one position, or may be distributed on a plurality of network elements. Some or all of the units may be selected according to actual requirements to achieve the objectives of the solutions of embodiments.

In addition, functional units in embodiments of the present application may be integrated into one processing unit, each of the units may exist alone physically, or two or more units are integrated into one unit.

The foregoing descriptions are merely specific implementations of the present application, but are not intended to limit the protection scope of the present application. Any variation or replacement readily figured out by a person skilled in the art within the technical scope disclosed in the present application shall fall within the protection scope of the present application. Therefore, the protection scope of the present application shall be subj ect to the protection scope of the claims.

**Claims**

1. A ranging method, comprising:

receiving, by a first device, a first timing advance TA corresponding to a terminal device, wherein the first TA is used for determining first distance information about the terminal device based on a TA quantization interval corresponding to the first TA, and the first distance information comprises a first distance between the terminal device and a network device;

determining, by the first device, second distance information about the terminal device; and

performing, by the first device, distance measurement on the terminal device based on the first distance information and the second distance information,

wherein the second distance information is determined based on one or more of following:

a path loss corresponding to the terminal device; or

a second TA, wherein a TA quantization interval corresponding to the second TA is less than the TA quantization interval corresponding to the first TA.

2. The ranging method according to claim 1, wherein the TA quantization interval corresponding to the second TA is determined based on one or more of following:

ranging accuracy for the terminal device;

a subcarrier spacing corresponding to the first TA; or

a ratio of the TA quantization interval corresponding to the second TA to the TA quantization interval corresponding to the first TA.

3. The ranging method according to claim 1 or 2, wherein indication information on the TA quantization interval corresponding to the second TA is carried in broadcast information.

4. The ranging method according to claim 1, wherein the first device is a positioning server, and the determining, by a first device, second distance information about the terminal device comprises:
receiving, by the first device by means of new radio positioning protocol a NRPPa signalling, indication information on the second TA and/or indication information on the TA quantization interval corresponding to the second TA.

5. The ranging method according to any one of claims 1 to 4, wherein the second distance information is determined based on the second TA, the second distance information comprises a second distance between the terminal device and the network device, and at least one of a sum of the first distance and the second distance or a difference between the first distance and the second distance is used as a result of the distance measurement.

6. The ranging method according to claim 1, wherein the method further comprises:
receiving, by the first device, a measurement time corresponding to at least one of the first TA or the second TA, wherein the measurement time is a time at which a base station receives an uplink pilot used for TA measurement.

7. The ranging method according to claim 1, wherein the first device is a terminal device, and the method further comprises:

transmitting, by the first device to the network device, a request for the second TA and/or a request for the TA quantization interval corresponding to the second TA;

receiving, by the first device, the second TA and/or the TA quantization interval corresponding to the second TA indicated by the network device; and

determining, by the first device, a distance between the terminal device and the network device based on the first TA and the second TA.

8. The ranging method according to claim 1, wherein the second distance information is determined based on the path loss, the path loss is used to determine a distance between the terminal device and the network device according to a first distance fitting formula, and the performing distance measurement on the terminal device comprises:

determining a first distance interval based on the first distance, wherein the first distance interval comprises a plurality of second distance intervals;

determining, by using the first distance fitting formula, a plurality of path loss change intervals that are in a one-to-one correspondence with the plurality of second distance intervals; and

determining a third distance between the terminal device and the network device based on a second distance interval corresponding to the path loss, wherein the third distance is used as a result of the distance measurement.

9. The ranging method according to claim 8, wherein the first distance interval is determined based on the first distance and the TA quantization interval corresponding to the first TA; and/or

the first distance interval meets following relationship:

$$[D–0.5\times\Delta d, \ D+0.5\times\Delta d],$$

wherein D denotes the first distance, and $\Delta d$ denotes a distance corresponding to the first TA when the first TA is 1.

10. The ranging method according to claim 8, wherein the plurality of second distance intervals are determined based on one or more of following: ranging accuracy for the terminal device; a width of the first distance interval, or the first distance fitting formula.

11. The ranging method according to claim 8, wherein the third distance is a distance corresponding to a midpoint of the second distance interval corresponding to the path loss.

12. A ranging method, comprising:

transmitting, by a network device, a first timing advance TA corresponding to a terminal device, wherein the first TA is used for determining first distance information about the terminal device based on a TA quantization interval corresponding to the first TA, and the first distance information comprises a first distance between the terminal device and the network device; and
transmitting, by the network device, indication information related to second distance information about the terminal device, wherein the second distance information is determined based on second TA, and a TA quantization interval corresponding to the second TA is less than the TA quantization interval corresponding to the first TA,
wherein the first distance information and the second distance information are used for performing distance measurement on the terminal device.

13. The ranging method according to claim 12, wherein the TA quantization interval corresponding to the second TA is determined based on one or more of following:

ranging accuracy for the terminal device;
a subcarrier spacing corresponding to the first TA; or
a ratio of the TA quantization interval corresponding to the second TA to the TA quantization interval corresponding to the first TA.

14. The ranging method according to claim 12 or 13, wherein indication information on the TA quantization interval corresponding to the second TA is carried in broadcast information.

15. The ranging method according to claim 12, wherein the transmitting, by the network device, indication information related to second distance information about the terminal device comprises:
transmitting, by the network device to a positioning server by means of new radio positioning protocol NRPPa signalling, indication information on the second TA and/or indication information on the TA quantization interval corresponding to the second TA.

16. The ranging method according to any one of claims 12 to 15, wherein the second distance information comprises a second distance between the terminal device and the network device, and at least one of a sum of the first distance and the second distance or a difference between the first distance and the second distance is used as a result of the distance measurement.

17. The ranging method according to claim 12, wherein the method further comprises:
transmitting, by the network device, a measurement time corresponding to the first TA and/or the second TA, wherein the measurement time is a time at which a base station receives an uplink pilot used for TA measurement.

18. The ranging method according to claim 12, wherein the transmitting, by the network device, indication information related to second distance information about the terminal device comprises:

receiving, by the network device, a request transmitted by a first device for the second TA and/or the TA quantization interval corresponding to the second TA; and

indicating, by the network device to the first device, the second TA and/or the TA quantization interval corresponding to the second TA.

19. A ranging apparatus, wherein the ranging apparatus is a first device, and the first device comprises:

a receiving unit, receiving a first timing advance TA corresponding to a terminal device, wherein the first TA is used for determining first distance information about the terminal device based on a TA quantization interval corresponding to the first TA, and the first distance information comprises a first distance between the terminal device and a network device;

a determining unit, determining second distance information about the terminal device; and

a ranging unit, performing distance measurement on the terminal device based on the first distance information and the second distance information,

wherein the second distance information is determined based on one or more of following:

a path loss corresponding to the terminal device; or

a second TA, wherein a TA quantization interval corresponding to the second TA is less than the TA quantization interval corresponding to the first TA.

20. A ranging apparatus, wherein the ranging apparatus is a network device, and the network device comprises:

a first transmitting unit, transmitting a first timing advance TA corresponding to a terminal device, wherein the first TA is used for determining first distance information about the terminal device based on a TA quantization interval corresponding to the first TA, and the first distance information comprises a first distance between the terminal device and the network device; and

a second transmitting unit, transmitting indication information related to second distance information about the terminal device, wherein the second distance information is determined based on a second TA, and a TA quantization interval corresponding to the second TA is less than the TA quantization interval corresponding to the first TA,

wherein the first distance information and the second distance information are used for performing distance measurement on the terminal device.

21. A communications apparatus, comprising a memory and a processor, wherein the memory is configured to store a program, and the processor is configured to invoke the program in the memory to execute the method according to any one of claims 1 to 18.

22. A communications apparatus, comprising a processor invoking a program from a memory to execute the method according to any one of claims 1 to 18.

23. A chip, comprising a processor invoking a program from a memory to cause a device installed with the chip to execute the method according to any one of claims 1 to 18.

24. A computer-readable storage medium, wherein the computer-readable storage medium stores a program, and the program causes a computer to execute the method according to any one of claims 1 to 18.

25. A computer program product, comprising a program, wherein the program causes a computer to execute the method according to any one of claims 1 to 18.

26. A computer program, wherein the computer program causes a computer to execute the method according to any one of claims 1 to 18.

**100**

FIG. 1

**200**

FIG. 2

FIG. 3

Actual distance — — Path loss-based fitted distance

FIG. 4

A first device receives first a TA corresponding to a terminal device — S510

The first device determines second distance information about the terminal device — S520

The first device performs distance measurement on the terminal device based on first distance information and the second distance information — S530

FIG. 5

Network device

First device

S610: First TA

S620: Indication information related to second
distance information about the terminal device

FIG. 6

Terminal
device

Network device

Positioning
server

S710: Positioning
service request

S710: Positioning
service request

S720: First TA

S720: First TA

S730: Second TA

S740: Estimating a distance
between the terminal device
and the network device

FIG. 7

Terminal device          Network device

S810: Requesting indication of a second TA

S820: Feeding back the second TA

S830: Estimating a delay between the terminal device and the network device

Step S840: Calculating a distance between the terminal device and the network device based on the delay

FIG. 8

Calculating a distance fitting formula by using a path loss —— S910

Determining a first distance interval based on a TA distance and performing segmentation to determine a corresponding path loss segment —— S920

Determining a segment interval in which a currently detected path loss is located —— S930

Determining a corresponding second distance interval based on the segment interval —— S940

Using a midpoint of the second distance interval as a distance of the terminal device —— S950

FIG. 9

Determining an estimated distance based on an
existing path loss and a distance formula — S1010

Calculating differences between the estimated
distance and TA distances — S1020

Calculating an average value of the plurality of
differences in Step S1020 — S1030

Subtracting the average value in a distance
fitting formula — S1040

FIG. 10

Calculating a first location of a terminal device — S1110

Determining a second location based on the first
location and a TA distance — S1120

Determining whether a distance between a neighboring
cell and a serving cell meets
a preset threshold — S1130

Determining a distance between the terminal device and
the neighboring cell based on the second location — S1140

Determining a distance fitting formula for the
neighboring cell based on the distance in Step S1140 — S1150

FIG. 11

Apparatus 1200

Receiving unit 1210

Determining unit 1220

Ranging unit 1230

FIG. 12

Apparatus 1300

First transmitting unit 1310

Second transmitting unit 1320

FIG. 13

Apparatus 1400

Processor 1410

Memory 1420

Transceiver 1430

FIG. 14

## INTERNATIONAL SEARCH REPORT

International application No.

**PCT/CN2023/081901**

| A. | CLASSIFICATION OF SUBJECT MATTER |
|---|---|

H04W 4/029(2018.01)i

According to International Patent Classification (IPC) or to both national classification and IPC

| B. | FIELDS SEARCHED |
|---|---|

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

WPABSC; CNTXT; CJFD; CNKI; 3GPP; IETF; VEN; ENTXT: 定位, 测距, 定时提前, 路损, 参考信号接收功率, 距离, 量化间隔, 第一TA, 第二TA, position, locat+, distance w measur+, time w advance, TA, path w loss, RSRP, distance, quantization w interval, first w TA, second w TA

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108471593 A (POTEVIO INFORMATION TECHNOLOGY CO., LTD.) 31 August 2018 (2018-08-31)<br>description, paragraphs [0024]-[0067] | 1-11, 19, 21-26 |
| A | CN 108471593 A (POTEVIO INFORMATION TECHNOLOGY CO., LTD.) 31 August 2018 (2018-08-31)<br>description, paragraphs [0024]-[0067] | 12-18, 20 |
| A | CN 102413565 A (SHANGHAI DATANG MOBILE COMMUNICATIONS EQUIPMENT CO., LTD. et al.) 11 April 2012 (2012-04-11)<br>entire document | 1-26 |
| A | CN 112203214 A (ZTE CORP.) 08 January 2021 (2021-01-08)<br>entire document | 1-26 |
| A | KR 20110041166 A (SAMSUNG SDS CO., LTD.) 21 April 2011 (2011-04-21)<br>entire document | 1-26 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **01 June 2023** | **30 August 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/081901**

| Patent document cited in search report | | | Publication date (day/month/year) | Patent family member(s) | | | Publication date (day/month/year) |
|---|---|---|---|---|---|---|---|
| CN | 108471593 | A | 31 August 2018 | CN | 108471593 | B | 12 February 2021 |
| CN | 102413565 | A | 11 April 2012 | | None | | |
| CN | 112203214 | A | 08 January 2021 | WO | 2020253359 | A1 | 24 December 2020 |
| KR | 20110041166 | A | 21 April 2011 | KR | 101080874 | B1 | 07 November 2011 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022116584854